Europäisches Patentamt

European Patent Office

Office européen des brevets

(19)

(11) Numéro de publication: **0 078 216**
**A1**

(12) **DEMANDE DE BREVET EUROPEEN**

(21) Numéro de dépôt: 82401962.4

(22) Date de dépôt: 26.10.82

(51) Int. Cl.³: **A 01 D 25/04**

(30) Priorité: 28.10.81 FR 8120219

(43) Date de publication de la demande:
04.05.83 Bulletin 83/18

(84) Etats contractants désignés:
AT BE CH DE GB IT LI NL

(71) Demandeur: W. & J.M. DEHONDT
Crasville-la-Mallet
F-76450 Cany Barville(FR)

(72) Inventeur: Dehondt, Willy
Crasville-la-Mallet
F-76450 Cany Barville(FR)

(74) Mandataire: Collignon, Pierre et al,
Cabinet Collignon 6, rue de Madrid
F-75008 Paris(FR)

(54) Disque arracheur perfectionné pour machine d'arrachage de betteraves ou de racines comparables.

(57) Le disque tournant 2, de forme concave, présente sur sa périphérie une succession de crans 4 ou d'ondulations qui, en améliorant l'adhérence du disque, empêchent le freinage de la machine équipée des disques et qui participent au soulèvement des betteraves pour leur arrachage.

Fig.1

EP 0 078 216 A1

1

## Disque arracheur perfectionné pour machine d'arrachage de betteraves ou de racines comparables.

L'invention concerne les machines pour l'arrachage de betteraves ou de racines comparables et, plus particulièrement, les disques tournants d'arrachage équipant de telles machines.

On a longtemps utilisé, comme éléments arracheurs sur les machines à arracher les betteraves, des socs fixes qui présentaient l'inconvénient de provoquer un bourrage important dû en particulier aux herbes, aux feuilles, ou aux conditions souvent difficiles d'arrière saison. Pour éviter ces bourrages, on a proposé d'utiliser des socs décrivant un mouvement de pivotement alternatif, mais de tels dispositifs sont fragiles et augmentent sensiblement le coût de la machine.

On a également proposé d'utiliser, comme éléments arracheurs, des disques concaves à bord périphérique lisse montés à rotation libre autour de leur axe horizontal et qui attaquent latéralement les betteraves pour les soulever et assurer leur arrachage. De tels disques d'arrachage ne donnent pas toute satisfaction car, leur adhérence au sol étant imparfaite, ils tournent généralement à une vitesse très inférieure à la vitesse d'avancement de la machine en provoquant un freinage de celle-ci, qui travaille alors dans de mauvaises conditions en nécessitant un surcroît d'énergie motrice. De plus, la mauvaise adhérence de ces disques d'arrachage connus a pour conséquence un apport de terre sensible et indésirable dans les éléments nettoyeurs équipant généralement les machines d'arrachage et recevant les betteraves arrachées.

La présente invention a pour objet de remédier aux inconvénients exposés ci-dessus des éléments arracheurs connus et elle propose à cet effet un disque d'arrachage conçu pour présenter une excellente adhérence au sol qui lui permet de tourner à la vitesse d'avancement de la machine, autorisant ainsi celle-ci à fonctionner dans des conditions optimales, pour ne provoquer qu'un faible soulèvement de terre, et qui présente des qualités améliorées de saisie de la betterave pour le soulèvement et l'arrachage de celle-ci.

Selon l'invention le disque d'arrachage, qui comporte toujours de préférence une forme concave, présente dans la zone de sa périphérie des crans ou des ondulations qui favorisent l'adhérence au sol. De plus, ces crans ou ondulations permettent une meilleure saisie de la betterave par la partie enterrée du disque et donc une action plus efficace de soulèvement et d'arrachage de celle-ci.

Pour bien faire comprendre la structure du disque d'arrachage selon l'invention, on en décrira ci-après deux formes d'exécution préférées en référence au dessin schématique annexé dans lequel :

la figure 1 est une vue de profil d'une première forme d'exécution de disque d'arrachage à crans périphériques

la figure 2 est une vue de face du disque d'arrachage de la figure 1 ;

la figure 3 est une vue de profil d'une seconde forme d'exécution de disque d'arrachage à ondulations périphériques et

la figure 4 est une vue schématique en plan montrant un exemple d'implantation de disques d'arrachage selon l'invention sur le châssis d'une machine arracheuse six rangs.

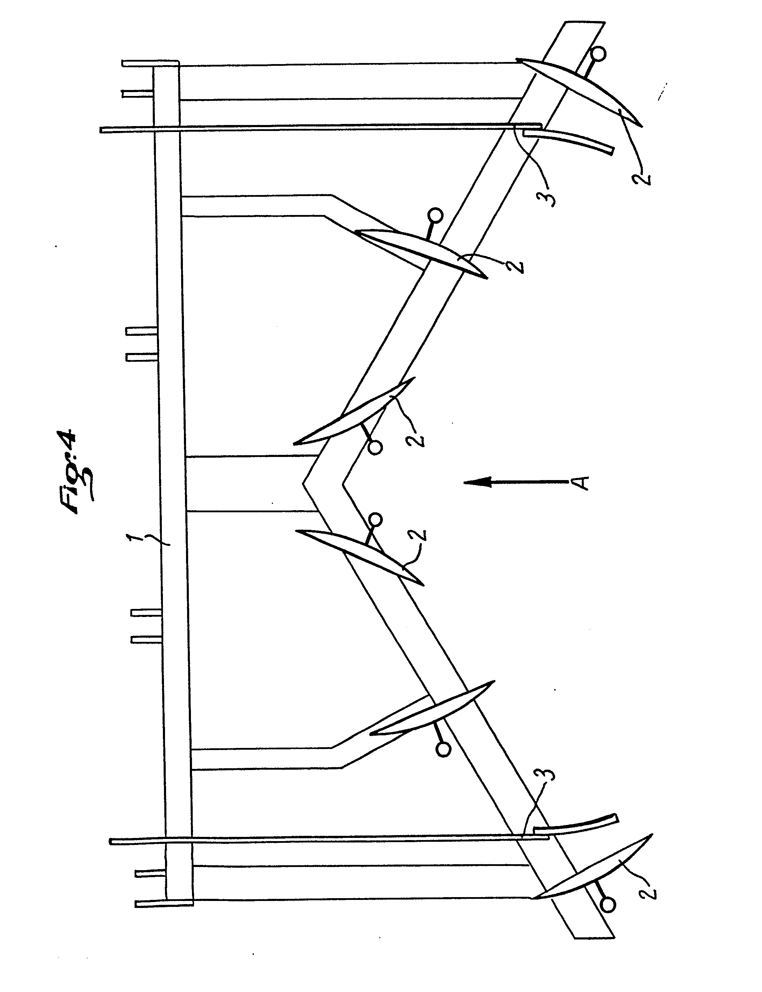

En référence d'abord à la figure 4, on a schématisé la partie avant du châssis 1 d'une arracheuse de betteraves six rangs, portant six disques d'arrachage 2 écartés les uns des autres pour coopérer chacun simultanément avec l'un de six rangs consécutifs de betteraves. Chaque disque 2, de forme concave, est monté à rotation libre autour de son axe horizontal qui est oblique par rapport à la direction d'avancement de la machine indiquée par la flèche A. A chaque disque 2 est associé un patin 3 (seuls les patins associés aux deux disques extrêmes sont représentés au dessin) qui fait un petit angle avec la direction d'avancement A et qui a pour fonction de déchausser d'un côté la betterave pour faciliter son arrachage sur l'autre côté par le disque 2.

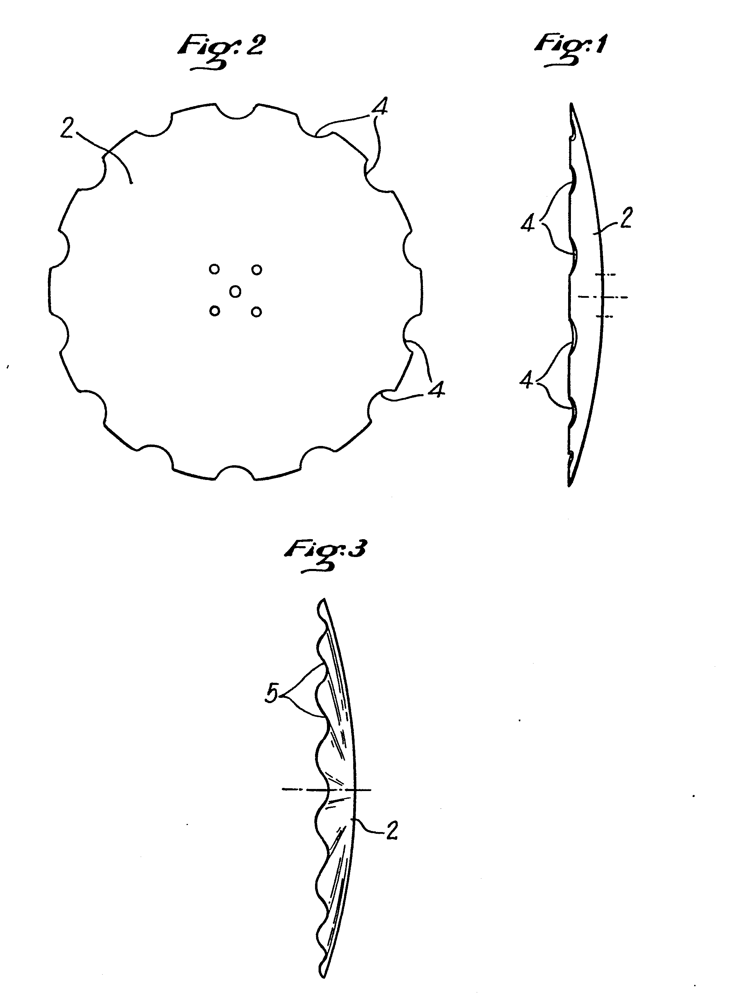

Aux figures 1 et 2, on a représenté une première forme d'exécution du disque d'arrachage 2 selon laquelle une succession de crans 4 sont pratiqués sur la périphérie de ce disque. On comprend sans peine que, grâce aux crans 4, le disque 2 bénéficie d'une excellente adhérence au sol lors de l'avancement de la machine, ce qui lui permet de tourner pratiquement à la vitesse d'avancement de la machine, sans freiner le mouvement de celle-ci, et en ne provoquant qu'un faible soulèvement de terre susceptible d'atteindre l'élément récepteur des betteraves arrachées (non représenté au dessin) qui équipe généralement les machines arracheuses.

On comprend de plus que la coopération des crans 4 ménagés à la périphérie du disque 2 avec la betterave, lors de l'arrachage de celle-ci, aide à la saisie de la betterave et facilite le soulèvement de celle-ci.

A la figure 3, on a représenté une variante du disque d'arrachage 2 selon l'invention qui, au lieu de présenter des crans, présente des ondulations périphériques 5 qui assurent un résultat avantageux du même ordre pour l'adhérence au sol du disque d'arrachage et la saisie améliorée de la betterave lors de son soulèvement.

On comprendra que la description ci-dessus a été donnée à simple titre d'exemple, sans caractère limitatif, et que des adjonctions ou des modifications constructives pourraient y être apportées sans sortir du cadre de l'invention définie par les revendications annexées.

# R E V E N D I C A T I O N S.

1. Disque d'arrachage présentant une forme concave et destiné à être monté en rotation libre autour de son axe horizontal sur le châssis d'une machine arracheuse de betteraves ou de racines analogues, ledit axe horizontal étant disposé obliquement par rapport à la direction d'avancement de la machine, caractérisé par le fait que le disque présente un contour sinueux permettant une bonne adhérence au sol et aidant à la saisie de la racine à arracher.

2. Disque d'arrachage selon la revendication 1, caractérisé par le fait qu'il présente sur sa périphérie une succession de crans.

3. Disque d'arrachage selon la revendication 1, caractérisé par le fait que sa périphérie présente une succession d'ondulations.

Fig:2

Fig:1

Fig:3

Fig.4

Office européen
des brevets

**RAPPORT DE RECHERCHE EUROPEENNE**

**0078216**
Numéro de la demande

EP 82 40 1962

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| | --- | | A 01 D 25/04 |
| X | FR-A-2 210 086 (HERRIAU) *En entier* | 1,2 | |
| | --- | | |
| A | FR-A-1 250 890 (OPPEL) *Page 2, colonne de droite, paragraphe 2; figures 1-4* | 1,2 | |
| | --- | | |
| A | FR-A-1 590 738 (PFLUGFABRIK LEMKEN KG.) *Page 1, ligne 34 - page 2, ligne 26; figures 1,2* | 1-3 | |
| | ----- | | |

DOMAINES TECHNIQUES
RECHERCHES (Int. Cl. ³)

A 01 D

Le présent rapport de recherche a été établi pour toutes les revendications

| Lieu de la recherche LA HAYE | Date d'achèvement de la recherche 31-01-1983 | Examinateur MARTIN D.R.V. |
|---|---|---|